(19) Europäisches Patentamt
European Patent Office
Office européen des brevets

(11) **EP 3 964 862 B1**

(12) **EUROPEAN PATENT SPECIFICATION**

(45) Date of publication and mention
of the grant of the patent:
**01.05.2024  Bulletin 2024/18**

(21) Application number: **20194271.1**

(22) Date of filing: **03.09.2020**

(51) International Patent Classification (IPC):
*G01S 7/4865* (2020.01)      *G01S 7/487* (2006.01)
*G01S 17/50* (2006.01)       *H04N 23/70* (2023.01)

(52) Cooperative Patent Classification (CPC):
**G01S 17/50; H04N 23/70;** G01S 17/894;
G01S 17/931; H04N 23/6845

(54) **METHOD AND APPARATUS FOR DETECTING MOTION IN A SCENE USING A TIME-OF-FLIGHT SENSOR**

VERFAHREN UND VORRICHTUNG ZUR ERFASSUNG VON BEWEGUNG IN EINER SZENE MIT EINEM FLUGZEITSENSOR

PROCÉDÉ ET APPAREIL DE DÉTECTION DE MOUVEMENT DANS UNE SCÈNE AU MOYEN D'UN CAPTEUR DE DURÉE DE VOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2022  Bulletin 2022/10**

(73) Proprietor: **Infineon Technologies AG**
**85579 Neubiberg (DE)**

(72) Inventors:
• **SCHOENLIEB, Armin**
**8054 Seiersberg-Pirka (AT)**
• **PLANK, Hannes**
**8010 Graz (AT)**
• **NAHLER, Caterina**
**8077 Thondorf (AT)**

(74) Representative: **2SPL Patentanwälte PartG mbB**
**Landaubogen 3**
**81373 München (DE)**

(56) References cited:
**EP-A1- 2 978 216      US-A1- 2015 338 509**

## Description

## Field

The present disclosure relates to motion detection. In particular, examples relate to a method and an apparatus for detecting motion in a scene using a Time-of-Flight (ToF) sensor.

## Background

The detection of motion in a sensed scene may be beneficial for various purposes. For example, the detection of motion may be used for adjusting a frame rate used for capturing the scene or directly for generating optical flow data for gesture recognition and autonomous driving.

A variety of sensors such as high-speed cameras, event-based imagers or ToF sensors for capturing motion in a scene exist. A conventional ToF sensor needs to take at least two images to detect motion in the sensed scene. A reduction of the number of images is beneficial as higher framerates are possible and less power is required.

Document US 2015/338509 A1 proposes a method for operating a ToF camera including a ToF sensor comprising an array of ToF pixels with at least two integration nodes. In a 3D mode the ToF sensor and an illumination means are operated by means of a modulation signal and on the basis of the charges accumulated at the integration nodes distance values are determined. In a power saving mode the ToF sensor is operated with a control signal for motion detection, the frequency of which is lower than a lowest frequency of the modulation signal for a distance determination in the 3D mode. An object motion is determined based on a differential value at the integration nodes is provided.

Document EP 2 978 216 A1 proposes an image sensor in which the receiving device comprises a pixel matrix. The pixel matrix comprises at least two demodulation pixels, in particular 2-tap demodulation pixels, with the at least 2 demodulation pixels each being assigned at least two collection units. After taking an image and storing the charge carriers in one of the collecting units for taking a further picture, a switchover to one of the collecting units can take place. A difference-forming device for analog formation of a difference between the charge carriers stored in the collecting units, and an A/D Converter for converting the difference value formed by the difference-forming device and an evaluation unit are provided.

There may be a demand for improved motion detection using ToF sensing.

## Summary

The demand may be satisfied by the subject matter of the appended claims.

An example relates to a method for detecting motion in a scene using a ToF sensor. The ToF sensor comprises at least one photo-sensitive element comprising at least a first element with a modifiable first charge level and a second element with a modifiable second charge level. The method comprises for a single exposure time of the photo-sensitive element driving the at least one photo-sensitive element during the exposure time such that charge carriers generated in the photo-sensitive element by light received from the scene during the exposure time modify the first charge level for a first fraction of the exposure time and modify the second charge level for a second fraction of the exposure time. Further, the method comprises determining whether motion occurred in the scene during the exposure time based on a difference between the first charge level and the second charge level. The scene is not illuminated by the ToF sensor during the exposure time such that the light received from the scene comprises only ambient light. If it is determined that motion occurred during the exposure time, the method further comprises for a single further exposure time of the photo-sensitive element illuminating the scene with light. Additionally, the method further comprises driving the at least one photo-sensitive element during the further exposure time such that charge carriers generated in the photo-sensitive element by light received from the scene during the further exposure time modify the first charge level for a first fraction of the further exposure time and modify the second charge level for a second fraction of the further exposure time. Still further, the method comprises determining whether motion occurred in the scene during the further exposure time based on a difference between the first charge level and the second charge level.

Another example relates to an apparatus for detecting motion in a scene. The apparatus comprises a ToF sensor comprising at least one photo-sensitive element comprising at least a first element with a modifiable first charge level and a second element with a modifiable second charge level. Further, the ToF sensor comprises driver circuitry configured to drive the at least one photo-sensitive element during a single exposure time of the photo-sensitive element such that charge carriers generated in the photo-sensitive element by light received from the scene during the exposure time modify the first charge level for a first fraction of the exposure time and modify the second charge level for a second fraction of the exposure time. The apparatus additionally comprises a processing circuit configured to determine whether motion occurred in the scene during the exposure time based on a difference between the first charge level and the second charge level. The ToF sensor is configured to not illuminate the scene during the exposure time such that the light received from the scene comprises only ambient light. If it is determined that motion occurred during the exposure time, the ToF sensor is, for a single further exposure time of the photo-sensitive element, further configured to illuminate the scene with light. The driver circuitry is further configured to drive the at least one photo-sensitive element during the further exposure time such that charge carriers generated in the photo-sensitive element by light received from the scene during the further exposure time modify the first charge level for a first fraction of the further exposure time and modify the second charge level for a second fraction of the further exposure time. The processing circuit is further configured to determine whether motion occurred in the scene during the further exposure time based on a difference between the first charge level and the second charge level.

**Brief description of the Figures**

Some examples of apparatuses and/or methods will be described in the following by way of example only, and with reference to the accompanying figures, in which

    Fig. 1 illustrates a flowchart of an example of a method for detecting motion in a scene; and

    Fig. 2 illustrates an example of an apparatus for detecting motion in a scene;

    Fig. 3 illustrates an example of an illumination and a reference signal;

    Fig. 4 illustrates exemplary courses of a first and a second charge level; and

    Fig. 5 illustrates other exemplary courses of a first and a second charge level.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

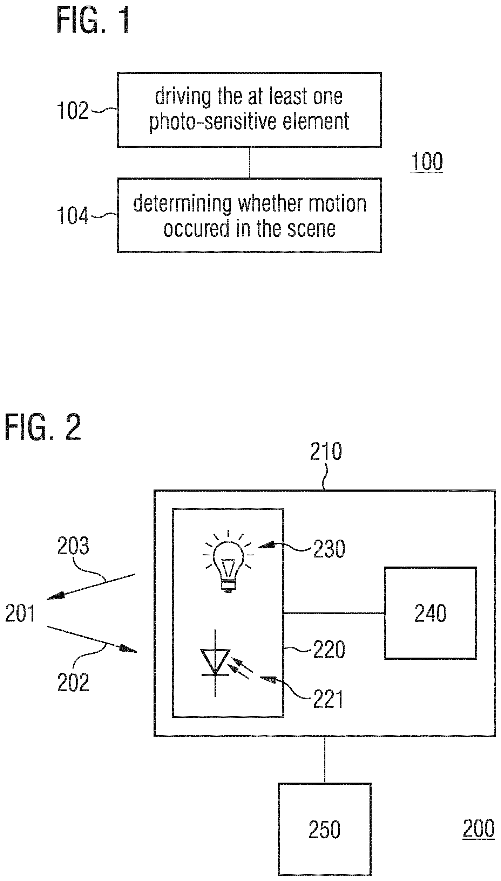

Fig. 1 illustrates a flowchart of an example of a method 100 for detecting motion in a scene using a ToF sensor. The method 100 will be described in the following further with reference to Fig. 2 which illustrates an exemplary apparatus 200 for detecting motion in a scene 201.

The apparatus 200 comprises a ToF sensor 210. The ToF sensor 200 comprises an illumination element 230 for emitting light 203 to the scene 201 and a light capturing element 220 for capturing light 202 received from the scene 201. Further, the ToF sensor 210 comprises driver circuitry 240 for driving (controlling) the illumination element 230 and the light capturing element 220.

The illumination element 230 generates the (e.g. modulated) light 203. The illumination element 230 may comprise any number of light sources. The illumination element 230 may, e.g., comprise one or more Light-Emitting Diodes (LEDs) and/or one or more laser diodes (e.g. one or more Vertical-Cavity Surface-Emitting Lasers, VCSELs) which are fired based on one or more illumination signals provided by the driver circuitry 240.

The light capturing element 220 may comprise various components such as e.g. optics (e.g. one or more lenses) and electronic circuitry. In particular, the electronic circuitry comprises an image sensor comprising at least one photo-sensitive element or pixel 221 (e.g. comprising a Photonic Mixer Device, PMD, or a Charge-Coupled Device, CCD). For example, the image sensor may comprise a plurality of photo-sensitive elements or pixels. The at least one photo-sensitive element or pixel 221 may be driven based on one or more reference signals provided by the driver circuitry 240.

The at least one photo-sensitive element 221 comprises at least a first element with a modifiable first charge level and a second element with a modifiable second charge level. In some examples, the at least one photo-sensitive element 221 may comprise more than two elements with a respective modifiable charge level. The charge level of the respective element is modifiable by charge carriers generated in the photo-sensitive element 221 by the light 202 received from the scene 201. The charge carriers may, e.g., be generated by the light 202 based on the photoelectric effect. For example, the elements with the respective modifiable charge level may be capacitors or potential wells formed in a semiconductor material of the respective photo-sensitive element.

In the following, the method 100 for detecting motion in the scene 201 will be described for a single exposure time of the at least one photo-sensitive element 221 of the light capturing element 220. The single exposure time refers to a single continuous measuring operation for sensing the scene 201 during which the at least one photo-sensitive element 221 is active and exposed to the light 202 arriving from the scene 201. In other words, the at least one photo-sensitive element 221 is exposed to the light 202 arriving from the scene 201 and is actively measuring the light 202 arriving from the scene 201 for the predefined continuous exposure time in order to sense the scene 201. It is to be noted that the method 100 may be performed repeatedly.

For the single exposure time of the photo-sensitive element 221, the method 100 comprises driving 102 the at least one photo-sensitive element 221 during the exposure time such that charge carriers generated in the photo-sensitive element 221 by the light 202 received from the scene 201 during the exposure time modify the first charge level for a first fraction of the exposure time and modify the second charge level for a second fraction of the exposure time. For example, the driver circuitry 240 may drive the at least one photo-sensitive element 221 based on one or more reference signals such that charge carriers generated in the photo-sensitive element 221 by the light 202 received from the scene 201 during the exposure time modify the first charge level for a first fraction of the exposure time and modify the second charge level for a second fraction of the exposure time. In case the at least one photo-sensitive element 221 comprises more than two elements with a respective modifiable charge level, the drive circuitry 240 may drive them accordingly such that charge carriers generated in the photo-sensitive element 221 by the light 202 received from the scene 201 during the exposure time modify the respective charge level of each of the elements for a respective (e.g. predefined) fraction of the exposure time.

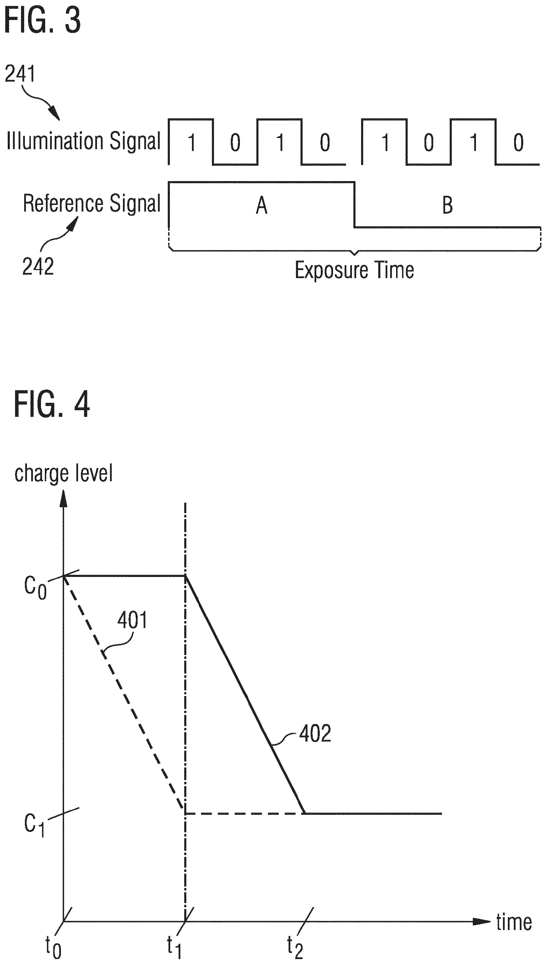

This is exemplarily illustrated in Fig. 3 for the case that the photo-sensitive element 221 comprises two elements with a respective modifiable charge level. Fig. 3 illustrates a reference signal 242 used for driving the photo-sensitive element 221 during the exposure time. The signal level of the reference signal 242 changes once during the exposure time such that only the first element with the modifiable first charge level is active while the signal level is high and that only the second element with the modifiable second charge level is active while the signal level is low. Accordingly, the charge carriers generated in the photo-sensitive element 221 by the light 202 received from the scene 201 during the exposure time accumulate at the first element while the signal level is high and accumulate at the second element while the signal level is low. Therefore, the charge carriers generated in the photo-sensitive element 221 by the light 202 received from the scene 201 during the exposure time modify the first charge level for a first fraction of the exposure time (while the signal level of the reference signal 242 is high) and modify the second charge level for a second fraction of the exposure time (while the signal level of the reference signal 242 is low). For example, the charge carriers generated in the photo-sensitive element 221 by the light 202 received from the scene 201 during the exposure time may increase or decrease the respective charge level. The charge levels of the first and the second element may be equal or different from each other at the beginning of the exposure time.

Further illustrated in Fig. 3 is an illumination signal 241 not according to the claimed invention for driving the illumination element 230 during the exposure time in order to illuminate the scene 201 with the light 203 (e.g. modulated light) such that the light 202 received from the scene 201 comprises reflections of the emitted light 203 from the scene. However, it is to be noted that it is not necessary to actively illuminate the scene 201 during the exposure time. According to the claimed invention, the scene 201 is not illuminated by the ToF sensor 210 during the exposure time such that the light received 202 from the scene 201 comprises only ambient (background) light from the scene 201.

Referring back to Fig. 1, the method 100, for the single exposure time of the at least one photo-sensitive element 221, additionally comprises determining 104 whether motion occurred in the scene during the exposure time based on a difference between the first charge level and the second charge level.

The apparatus 200 comprises an accordingly configured processing circuit 250, which is coupled to the ToF sensor 210. For example, the processing circuit 250 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The processing circuit 245 may optionally be coupled to, e.g., read only memory (ROM) for storing software, random access memory (RAM) and/or non-volatile memory. The processing circuit 250 is configured to determine whether motion occurred in the scene 201 during the exposure time based on a difference between the first charge level and the second charge level. For example, an output signal of the ToF sensor 210 may indicate the difference between the first charge level and the second charge level.

The apparatus 200 may comprise further hardware - conventional and/or custom.

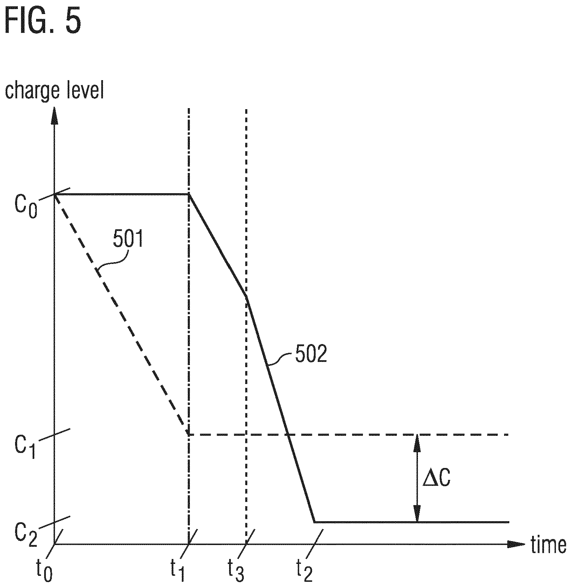

How to determine whether motion occurred in the scene 201 during the exposure time will be described in the following with respect to Figs. 4 and 5. Fig. 4 illustrates the temporal courses 401 and 402 of the charge levels of two elements with modifiable charge levels assuming that the scene is static, i.e. that no motion occurs in the scene during the exposure time.

The exposure time starts at a time instant $t_0$ and ends a time instant $t_2$. At the time instant $t_0$, the first charge level 401 of the first element is $C_0$. Also the second charge level 402 of the second element is $C_0$ at the time instant $t_0$. The at least one photo-sensitive element 221 is driven such that the charge carriers generated in the photo-sensitive element 221 by the light 202 received from the scene 201 modify the first charge level 401 for a first fraction of the exposure time, which starts at the time instant $t_0$ and ends at the time instant $t_1$. Further, the at least one photo-sensitive element 221 is driven such that the charge carriers generated in the photo-sensitive element 221 by the light 202 received from the scene 201 modify the second charge level 402 for a second fraction of the exposure time, which starts at the time instant $t_1$ and ends at the time instant $t_2$.

In the example of Fig. 4, a duration of the first fraction of the exposure time (time span from time instant $t_0$ to time instant ti) is equal to a duration of the second fraction of the exposure time (time span from time instant $t_1$ to time instant $t_2$), i.e. the first fraction and the second fraction are equally long in time. As there is no motion in the scene, the light 202 received from the scene 201 during the first fraction of the exposure time is substantially equal to the light 202 received from the scene 201 during the second fraction of the exposure time. Accordingly, the charge carriers are generated equally in the photo-sensitive element 221 during first fraction of the exposure time and the second fraction of the exposure time. Therefore, the first charge level 401 and the second charge level 402 are equally modified by the charge carriers generated in the photo-sensitive element 221 by the light 202 received from the scene 201. In the example of Fig. 4, the first charge level 401 and the second charge level 402 are equally decreased by the charge carriers generated in the photo-sensitive element 221 by the light 202 received from the scene 201.

Accordingly, the first charge level 401 of the first element is $C_1$ at the time instant $t_2$ (as the first charge level 401 is no longer modified by the generated charge carriers after the time instant ti). Also the second charge level 402 of the second element is $C_1$ at the time instant $t_2$. Thus, the difference between the first charge level 401 and the second charge level 402 at the end of the exposure time is zero.

As a comparison, Fig. 5 illustrates the temporal courses 501 and 502 of the charge levels of the two elements assuming that the scene is dynamic, i.e. that motion occurs in the scene during the exposure time.

Again, each of the first charge level 501 of the first element and the second charge level 502 of the second element is $C_0$ at the time instant $t_0$. Analogously to what is described above for Fig. 4, the at least one photo-sensitive element 221 is driven such that the charge carriers generated in the photo-sensitive element 221 by the light 202 received from the scene 201 modify the first charge level 501 for a first fraction of the exposure time, which starts at the time instant $t_0$ and ends at the time instant $t_1$. Further, the at least one photo-sensitive element 221 is driven such that the charge carriers generated in the photo-sensitive element 221 by the light 202 received from the scene 201 modify the second charge level 502 for a second fraction of the exposure time, which starts at the time instant $t_1$ and ends at the time instant $t_2$. Again, a duration of the first fraction of the exposure time (time span from time instant $t_0$ to time instant ti) is equal to a duration of the second fraction of the exposure time (time span from time instant $t_1$ to time instant $t_2$).

Initially, no motion occurs in the scene 201 similar to the example of Fig. 4. Therefore, the first charge level 501 is modified during the first fraction of the exposure time (from the time instant $t_0$ to the time instant ti) similar to what is described above for the first charge level 401 in the example of Fig. 4. As a consequence, the first charge level 501 of the first element is again $C_1$ at the time instant $t_2$ (as the first charge level 501 is no longer modified by the generated charge carriers after the time instant ti).

The second charge level 502 is modified during the second fraction of the exposure time (from the time instant $t_1$ to the time instant $t_2$). No motion occurs in the scene 201 at the beginning of the second fraction of the exposure time. However, in contrast to the example of Fig. 4, motion occurs in the scene 201 at a time instant $t_3$ during the second fraction of the exposure time. As the scene is changed due to the motion/movement at the time instant $t_3$, the light 202 received from the scene 201 from the time instant $t_1$ to the time instant $t_3$ is different from the light 202 received from the scene 201 from the time instant $t_3$ to the time instant $t_2$. Therefore, the amount of charge carriers generated in the at least one photo-sensitive element 221 per unit time is different between the time span from the time instant $t_1$ to the time instant $t_3$ and the time span from the time instant $t_3$ to the time instant $t_2$.

Accordingly, the second charge level 502 is modified differently by the charge carriers generated in the photo-sensitive element 221 by the light 202 received from the scene 201 for the time span from the time instant $t_1$ to the time instant $t_3$ and charge carriers generated in the photo-sensitive element 221 for the time span from the time instant $t_3$ to the time instant $t_2$. The second charge level 502 of the second element is therefore $C_2$ at the time instant $t_2$.

In other words, the first charge level 501 and the second charge level 502 are modified differently by the charge carriers generated in the photo-sensitive element 221 by the light 202 received from the scene 201 during the exposure time due to the motion at the time instant $t_3$. In the example of Fig. 5, the first charge level 501 and the second charge level 502 are decreased differently by the charge carriers generated in the photo-sensitive element 221 by the light 202 received from the scene 201 due to the motion at the time instant $t_3$. Therefore, the first charge level 501 and the second charge level 502 differ by a charge difference $\Delta C$ at the end of the exposure time.

When comparing the examples of Fig. 4 and Fig. 5, it is evident that the difference between the first charge level and the second charge level at the end of the exposure time is indicative of whether motion occurred in a sensed scene during the exposure time. Compared to conventional ToF-based approaches using multiple images, the proposed method 100 may allow to determine whether motion occurred in a sensed scene using only a single exposure time, i.e. a single image. Accordingly, motion detection at a higher frame and with reduced power consumption may be enabled by the proposed technique.

If the photo-sensitive element 221 separates generated charge carriers into, e.g., two capacitors which are discharged by the incoming light, the voltage difference between the two capacitors may be measured as the voltage difference indicates the difference of the charge levels of the two capacitors. If the scene is static during the exposure, the readout of both capacitors is the same. If there is movement in the scene (in any dimension), the capacitors are discharged differently and the voltage of the one capacitor will not be the same as the voltage of the other capacitor.

For example, referring to the example of Fig. 4, it may be determined that no motion occurred in the scene 201 during the exposure time if the difference between the first charge level 401 and the second charge level 402 (at the end of the exposure time) does not differ from a predefined value such as zero. Alternatively, it may be determined that no motion occurred in the scene 201 during the exposure time if the difference between the first charge level 401 and the second charge level 402 (at the end of the exposure time) differs from a predefined value such as zero by less than a threshold value. The threshold value may allow to compensate for noise as the first charge level 401 and the second charge level 402 may slightly vary at the end of the exposure time due to the noise.

For example, referring to the example of Fig. 5, it may be determined that motion occurred in the scene 201 during the exposure time if the difference between the first charge level 501 and the second charge level 502 (at the end of the exposure time) differs from a predefined value such as zero. Alternatively, it may be determined that motion occurred in the scene 201 during the exposure time if the difference between the first charge level 501 and the second charge level 502 (at the end of the exposure time) differs from a predefined value such as zero by more than a threshold value. Again, the threshold value may allow to compensate for noise as the first charge level 501 and the second charge level 502 may slightly vary due to the noise.

The determination whether motion occurred in the scene 201 may be implemented as a post processing step. For example, a simple comparison may allow to detect movement:

$$X = 1 \quad if(A \neq B) \qquad (1)$$

$$X = 0 \quad if(A = B) \qquad (2)$$

In mathematical expressions (1) and (2), $A$ denotes the first charge level and $B$ denotes the second charge level. Further, $X = 1$ denotes that that motion occurred and $X = 0$ denotes that no motion occurred. For example, a single image may be used for the motion detection enabling high frame rates for motion tracking applications.

Further, it is to be noted that the predefined value to which the difference between the charge levels is compared need not be zero. The predefined value may be zero in case the first fraction of the exposure time is equally long as the second fraction of the exposure time as described above. However, in some examples, the first fraction of the exposure time may be different from the second fraction of the exposure time. For example, the first fraction of the exposure time may be greater or smaller than the second fraction of the exposure time. Accordingly, even though there occurs no motion in the scene 201 during the exposure time, the first charge level will be different from the second charge level due to the different fractions of the exposure time used for modifying the first charge level and the second charge level. Therefore, an according predefined value which is non-zero may be defined for motion detection. Similarly, the first charge level and the second level may be different from each other at the beginning of the exposure time. Accordingly, the predefined value may be non-zero to account for the different charge levels at the beginning of the exposure time.

The method 100 may additionally comprise applying a respective correction to at least one of the first charge level and the second charge level prior to determining the difference between the first charge level and the second charge level. Accordingly, errors of the ToF measurement or different fractions of the exposure time used for modifying the first charge level and the second charge level may be compensated. For example, at least one of the first charge level and the second charge level may be scaled in order to compensate for different fractions of the exposure time used for modifying the first charge level and the second charge level.

As described above, only the ambient light is used for the detection of movement as the background infrared light of the scene 201 may be sufficient for the motion detection. In other words, the scene 201 is not illuminated by the ToF sensor 210 during the exposure time such that the light 202 received from the scene 201 comprises only ambient light. As the illumination element 230 is not used in this example, the power consumption

**may be reduced.**

Further, the exposure time may be scaled. For example, the method 100 may comprise adjusting the exposure time based on an expected maximum motion or an expected motion speed in the scene. Accordingly, a Signal-to-Noise Ration (SNR) and the frame rate may be adjusted.

As described above, the scene need not be illuminated in the method 100 by the ToF sensor 210 during the exposure time such that the light 202 received from the scene 201 comprises only ambient light. However, if a movement (i.e. motion) is detected, the illumination element 230 may be activated subsequently for improved tracking. Accordingly, if it is determined that motion occurred during the exposure time, the method 100 may, for a single further (second) exposure time of the photo-sensitive element 221, further comprise illuminating the scene 201 with the light 203 such that the light 202 received from the scene 201 during the further exposure time comprises reflections of the emitted light 203 from the scene. Analogously to what is described above, the method 100 may further comprise driving the at least one photo-sensitive element 221 of the light capturing element 220 during the further exposure time such that charge carriers generated in the photo-sensitive element 221 by the light 202 received from the scene 201 during the further exposure time modify the first charge level for a first fraction of the further exposure time and modify the second charge level for a second fraction of the further exposure time. Again, determining whether motion occurred in the scene during the further exposure time may be based on a difference between the first charge level and the second charge level obtained for the further exposure time. Accordingly, hybrid passive and active tracking may be enabled. The illumination element 220 is only activated if motion occurs. Accordingly, power consumption may be reduced.

Further, the detection of motion may be used to trigger the capture of depth or grayscale images. For example, if it is determined that motion occurred during the exposure time, the method 100 may further comprise performing one or more ToF measurements using the at least one photo-sensitive element 221 for obtaining at least one of a depth image and a greyscale image of at least part of the scene 201 (for example one or more continuous wave and/or one or more coded modulation measurements may be performed).

In other examples, the amount of motion may be determined additionally. For example, if it is determined that motion occurred during the exposure time, the method 100 may further comprise determining an amount of motion in the scene 201 during the exposure time based on the difference between the first charge level and the second charge level. The amount of motion in the scene 201 during the exposure time may, e.g., be determined by comparing the difference between the first charge level and the second charge level to at least one motion threshold value related to a respective amount of motion. The change in charge level is an indication for motion such that stronger changes in charge levels allow to predict faster motion(s) in the scene.

Alternatively, the combined photo-sensitive elements or pixels may be compared to a motion threshold value. In other words, for a plurality of photo-sensitive elements each comprising at least the first element and the second element, determining the amount of motion in the scene during the exposure time may comprise determining a combined difference (value) based on the differences between the first charge level and the second charge level for the plurality of photo-sensitive elements. For example, the combined difference (value) may be an average or a sum of the differences between the first charge level and the second charge level for the plurality of photo-sensitive elements. The amount of motion in the scene 201 during the exposure time may then be determined by comparing the combined difference (value) to at least one motion threshold value related to a respective amount of motion.

In some examples, an output signal of the ToF sensor 210 may further indicate a sum of the first charge level and the second charge level. The sum of the charge levels may be used for determining a greyscale image of the scene 201. For example, the method 100 may, for the single exposure of the photo-sensitive element 221, comprise determining a greyscale image for at least part of the scene 201 based on the sum of the first charge level and the second charge level.

The proposed technique for motion detection may be used for various applications. For example, in an automotive context, the ToF sensor 210 may be used in a motion tracking mode as described above at high travel speed (e.g. as a substitute for event based imagers) and as a depth sensor at low speed (e.g. for parking assistance or lane detection). In other words, the proposed technique further relates to a method for a vehicle comprising a ToF sensor. The method comprises using the ToF sensor for performing the method for detecting motion as proposed herein while a speed of the autonomous vehicle is in a first speed range for detecting motion in an environment of the autonomous vehicle. Further, the method comprises using the ToF sensor for determining a distance to at least one object in the environment of the autonomous vehicle while the speed of the autonomous vehicle is in a second speed range. For example, a maximum speed in the second speed range is lower than a minimum speed in the first speed range.

Accordingly, the proposed technique also relates to a vehicle comprising ToF sensor, wherein the vehicle is adapted to perform the above method for the vehicle.

However, it is to be noted that the proposed technique is not limited thereto. The propose technique for motion detection may, e.g., be used for sleep monitoring, infant monitoring, surveillance or as power saving mode for motion sensing as well.

Examples of the present disclosure may enable active and passive motion detection with ToF sensors. In particular, examples of the present disclosure may enable detecting scene movement with a ToF camera using a single image. The proposed technique may enable to output motion data or trigger depth image capture.

## Claims

1. A method (100) for detecting motion in a scene using a time-of-flight sensor, wherein the time-of-flight sensor comprises at least one photo-sensitive element comprising at least a first element with a modifiable first charge level and a second element with a modifiable second charge level, the method comprising for a single exposure time of the photo-sensitive element:

   driving (102) the at least one photo-sensitive element during the exposure time such that charge carriers generated in the photo-sensitive element by light received from the scene during the exposure time modify the first charge level for a first fraction of the exposure time and modify the second charge level for a second fraction of the exposure time;
   determining (104) whether motion occurred in the scene during the exposure time based on a difference between the first charge level and the second charge level,
   wherein the scene is not illuminated by the time-of-flight sensor during the exposure time such that the light received from the scene comprises only ambient light, and
   wherein, if it is determined that motion occurred during the exposure time, the method further comprises for a single further exposure time of the photo-sensitive element:

   illuminating the scene with light;
   driving the at least one photo-sensitive element during the further exposure time such that charge carriers generated in the photo-sensitive element by light received from the scene during the further exposure time modify the first charge level for a first fraction of the further exposure time and modify the second charge level for a second fraction of the further exposure time; and
   determining whether motion occurred in the scene during the further exposure time based on a difference between the first charge level and the second charge level.

2. The method (100) of claim 1, wherein it is determined that no motion occurred in the scene if the difference between the first charge level and the second charge level does not differ from a predefined value or if the difference between the first charge level and the second charge level differs from the predefined value by less than a threshold value.

3. The method (100) of claim 1 or claim 2, wherein it is determined that motion occurred in the scene if the difference between the first charge level and the second charge level differs from a predefined value or if the difference between the first charge level and the second charge level differs from the predefined value by more than a threshold value.

4. The method (100) of any of claims 1 to 3, wherein a duration of the first fraction of the exposure time is equal to a duration of the second fraction of the exposure time.

5. The method (100) of any of claims 1 to 4, further comprising applying a respective correction to at least one of the first charge level and the second charge level prior to determining the difference between the first charge level and the second charge level.

6. The method (100) of any of claims 1 to 5, wherein an output signal of the time-of-flight sensor indicates the difference between the first charge level and the second charge level.

7. The method (100) of any of claims 1 to 6, further comprising for the single exposure time of the photo-sensitive element:
   illuminating the scene with light such that the light received from the scene comprises reflections of the light from the scene.

8. The method (100) of any of claims 1 to 7, wherein, if it is determined that motion occurred during the exposure time, the method further comprises:
   determining an amount of motion in the scene during the exposure time based on the difference between the first charge level and the second charge level.

9. The method (100) of claim 8, wherein determining the amount of motion in the scene during the exposure time comprises:
   comparing the difference between the first charge level and the second charge level to at least one motion threshold value related to a respective amount of motion.

10. The method (100) of claim 8, wherein the time-of-flight sensor comprises a plurality of photo-sensitive elements each comprising at least the first element and the second element, and wherein determining the amount of motion in the scene during the exposure time comprises:

determining a combined difference based on the differences between the first charge level and the second charge level for the plurality of photosensitive elements; and

comparing the combined difference to at least one motion threshold value related to a respective amount of motion.

11. The method (100) of any of claims 1 to 10, further comprising for the single exposure of the photo-sensitive element:

determining a greyscale image for at least part of the scene based on a sum of the first charge level and the second charge level.

12. An apparatus (200) for detecting motion in a scene (201), comprising:

a time-of-flight sensor (210) comprising:

at least one photo-sensitive element (221) comprising at least a first element with a modifiable first charge level and a second element with a modifiable second charge level; and

driver circuitry (240) configured to drive the at least one photo-sensitive element (221) during a single exposure time of the photo-sensitive element (221) such that charge carriers generated in the photo-sensitive element (221) by light (202) received from the scene (201) during the exposure time modify the first charge level for a first fraction of the exposure time and modify the second charge level for a second fraction of the exposure time; and

a processing circuit (250) configured to determine whether motion occurred in the scene (201) during the exposure time based on a difference between the first charge level and the second charge level,

wherein the time-of-flight sensor is configured to not illuminate the scene during the exposure time such that the light received from the scene comprises only ambient light, and wherein, if it is determined that motion occurred during the exposure time:

the time-of-flight sensor is, for a single further exposure time of the photo-sensitive element, further configured to illuminate the scene with light;

the driver circuitry (240) is further configured to drive the at least one photo-sensitive element during the further exposure time such that charge carriers generated in the photo-sensitive element by light received from the scene during the further exposure time modify the first charge level for a first fraction of the further exposure time and modify the second charge level for a second fraction of the further exposure time; and

the processing circuit (250) is further configured to determine whether motion occurred in the scene during the further exposure time based on a difference between the first charge level and the second charge level.

**Patentansprüche**

1. Ein Verfahren (100) zum Detektieren von Bewegung in einer Szene unter Verwendung eines Laufzeitsensors, wobei der Laufzeitsensor zumindest ein photosensitives Element umfasst, das zumindest ein erstes Element mit einem modifizierbaren ersten Ladungspegel und ein zweites Element mit einem modifizierbaren zweiten Ladungspegel umfasst, wobei das Verfahren für eine einmalige Expositionszeit des photosensitiven Elements umfasst:

Ansteuern (102) des zumindest einen photosensitiven Elements während der Expositionszeit, derart, dass Ladungsträger, die in dem photosensitiven Element durch Licht erzeugt werden, das von der Szene während der Expositionszeit empfangen wird, den ersten Ladungspegel für einen ersten Bruchteil der Expositionszeit modifizieren und den zweiten Ladungspegel für einen zweiten Bruchteil der Expositionszeit modifizieren;

Bestimmen (104), ob während der Expositionszeit eine Bewegung in der Szene stattgefunden hat, basierend auf einer Differenz zwischen dem ersten Ladungspegel und dem zweiten Ladungspegel,

wobei die Szene während der Expositionszeit nicht durch den Laufzeitsensor derart beleuchtet wird, dass das von der Szene empfangene Licht nur Umgebungslicht umfasst, und wobei, wenn bestimmt wird, dass während der Expositionszeit eine Bewegung stattgefunden hat, das Verfahren ferner für eine einmalige weitere Expositionszeit des photosensitiven Elements umfasst:

Beleuchten der Szene mit Licht;

Ansteuern des zumindest einen photosensitiven Elements während der weiteren Expositionszeit, derart, dass Ladungsträger, die in dem photosensitiven Element durch Licht erzeugt werden, das von der Szene während der weiteren Expositionszeit empfangen wird, den ersten Ladungspegel für einen ersten Bruchteil der weiteren Expositionszeit modifizieren und den zweiten Ladungspegel für einen zweiten Bruchteil der weiteren Expositionszeit modifizieren; und Bestimmen, ob während der weiteren Expositionszeit eine Bewegung in der Szene stattgefunden hat, basierend auf einer Differenz zwischen dem ersten Ladungspegel und dem zweiten Ladungspegel.

2. Das Verfahren (100) gemäß Anspruch 1, wobei bestimmt wird, dass keine Bewegung in der Szene stattgefunden hat, wenn die Differenz zwischen dem ersten Ladungspegel und dem zweiten Ladungspegel nicht von einem vordefinierten Wert abweicht oder wenn die Differenz zwischen dem ersten Ladungspegel und dem zweiten Ladungspegel von dem vordefinierten Wert um weniger als einen Schwellenwert abweicht.

3. Das Verfahren (100) gemäß Anspruch 1 oder Anspruch 2, wobei bestimmt wird, dass eine Bewegung in der Szene stattgefunden hat, wenn die Differenz zwischen dem ersten Ladungspegel und dem zweiten Ladungspegel sich von einem vordefinierten Wert unterscheidet oder wenn die Differenz zwischen dem ersten Ladungspegel und dem zweiten Ladungspegel sich von dem vordefinierten Wert um mehr als einen Schwellenwert unterscheidet.

4. Das Verfahren (100) gemäß einem der Ansprüche 1 bis 3, wobei eine Dauer des ersten Bruchteils der Expositionszeit gleich einer Dauer des zweiten Bruchteils der Expositionszeit ist.

5. Das Verfahren (100) gemäß einem der Ansprüche 1 bis 4, ferner umfassend ein Anwenden einer jeweiligen Korrektur auf zumindest einen von dem ersten Ladungspegel und dem zweiten Ladungspegel vor dem Bestimmen der Differenz zwischen dem ersten Ladungspegel und dem zweiten Ladungspegel.

6. Das Verfahren (100) gemäß einem der Ansprüche 1 bis 5, wobei ein Ausgangssignal des Laufzeitsensors die Differenz zwischen dem ersten Ladungspegel und dem zweiten Ladungspegel anzeigt.

7. Das Verfahren (100) gemäß einem der Ansprüche 1 bis 6, ferner umfassend für die einmalige Expositionszeit des photosensitiven Elements:
Beleuchten der Szene mit Licht, derart, dass das von der Szene empfangene Licht Reflexionen des Lichts von der Szene umfasst.

8. Das Verfahren (100) gemäß einem der Ansprüche 1 bis 7, wobei, wenn bestimmt wird, dass während der Expositionszeit eine Bewegung stattgefunden hat, das Verfahren ferner umfasst:

Bestimmen einer Menge an Bewegung in der Szene während der Expositionszeit basierend auf der Differenz zwischen dem ersten Ladungspegel und dem zweiten Ladungspegel.

9. Das Verfahren (100) gemäß Anspruch 8, wobei das Bestimmen der Menge an Bewegung in der Szene während der Expositionszeit umfasst:
Vergleichen der Differenz zwischen dem ersten Ladungspegel und dem zweiten Ladungspegel mit zumindest einem Bewegungsschwellenwert bezogen auf eine jeweilige Menge an Bewegung.

10. Das Verfahren (100) gemäß Anspruch 8, wobei der Laufzeitsensor eine Vielzahl von photosensitiven Elementen umfasst, die jeweils zumindest das erste Element und das zweite Element umfassen, und wobei das Bestimmen der Menge an Bewegung in der Szene während der Expositionszeit umfasst:

Bestimmen einer kombinierten Differenz basierend auf den Differenzen zwischen dem ersten Ladungspegel und dem zweiten Ladungspegel für die Vielzahl von photosensitiven Elementen; und
Vergleichen der kombinierten Differenz mit zumindest einem Bewegungsschwellenwert bezogen auf eine jeweilige Menge an Bewegung.

11. Das Verfahren (100) gemäß einem der Ansprüche 1 bis 10, ferner umfassend für die einmalige Exposition des photosensitiven Elements:
Bestimmen eines Graustufenbildes für zumindest einen Teil der Szene basierend auf einer Summe des ersten Ladungspegels und des zweiten Ladungspegels.

12. Eine Vorrichtung (200) zum Detektieren von Bewegung in einer Szene (201), umfassend:

einen Laufzeitsensor (210), umfassend:

zumindest ein photosensitives Element (221), das zumindest ein erstes Element mit einem modifizierbaren ersten Ladungspegel und ein zweites Element mit einem modifizierbaren zweiten Ladungspegel umfasst; und
eine Treiberschaltungsanordnung (240), die ausgebildet ist, das zumindest eine photosensitive Element (221) während einer einmaligen Expositionszeit des photosensitiven Elements (221) derart anzusteuern, dass Ladungsträger, die in dem photosensitiven Element (221) durch Licht (202) erzeugt werden, das von der Szene (201) während der Expositionszeit empfangen wird, den ersten Ladungspegel für einen ersten Bruchteil der Expositionszeit modifizieren und den zweiten Ladungspegel für einen zweiten Bruchteil der Expositionszeit modifizieren; und

eine Verarbeitungsschaltung (250), die ausgebildet ist, zu bestimmen, ob während der Expositionszeit eine Bewegung in der Szene (201) stattgefunden hat, basierend auf einer Differenz zwischen dem ersten Ladungspegel und dem zweiten Ladungspegel,
wobei der Laufzeitsensor ausgebildet ist, die Szene während der Expositionszeit nicht derart zu beleuchten, dass das von der Szene empfangene Licht nur Umgebungslicht umfasst, und
wobei, wenn bestimmt wird, dass während der Expositionszeit eine Bewegung stattgefunden hat:

der Laufzeitsensor für eine einmalige weitere Expositionszeit des photosensitiven Elements ferner ausgebildet ist, die Szene mit Licht zu beleuchten;
die Treiberschaltungsanordnung (240) ferner ausgebildet ist, das zumindest eine photosensitive Element während der weiteren Expositionszeit derart anzusteuern, dass Ladungsträger, die in dem photosensitiven Element durch Licht erzeugt werden, das von der Szene während der weiteren Expositionszeit empfangen wird, den ersten Ladungspegel für einen ersten Bruchteil der weiteren Expositionszeit modifizieren und den zweiten Ladungspegel für einen zweiten Bruchteil der weiteren Expositionszeit modifizieren; und
die Verarbeitungsschaltung (250) ferner ausgebildet ist, zu bestimmen, ob während der weiteren Expositionszeit eine Bewegung in der Szene stattgefunden hat, basierend auf einer Differenz zwischen dem ersten Ladungspegel und dem zweiten Ladungspegel.

**Revendications**

1. Procédé (100) pour détecter un mouvement dans une scène en utilisant un capteur temps de vol, dans lequel le capteur temps de vol comprend au moins un élément photosensible comprenant au moins un premier élément avec un premier niveau de charge modifiable et un deuxième élément avec un deuxième niveau de charge modifiable, le procédé comprenant, pour un temps d'exposition unique de l'élément photosensible, le fait de :

piloter (102) l'au moins un élément photosensible pendant le temps d'exposition de telle sorte que des porteurs de charge générés dans l'élément photosensible par la lumière reçue de la scène pendant le temps d'exposition modifient le premier niveau de charge pour une première fraction du temps d'exposition et modifient le deuxième niveau de charge pour une deuxième fraction du temps d'exposition ;
déterminer (104) si un mouvement s'est produit dans la scène pendant le temps d'exposition sur la base d'une différence entre le premier niveau de charge et le deuxième niveau de charge,
dans lequel la scène n'est pas éclairée par le capteur temps de vol pendant le temps d'exposition, de telle sorte que la lumière reçue de la scène ne comprend que de la lumière ambiante, et
dans lequel, s'il est déterminé qu'un mouvement s'est produit pendant le temps d'exposition, le procédé comprend en outre, pour un temps d'exposition unique supplémentaire de l'élément photosensible, le fait de :

éclairer la scène avec de la lumière ;
piloter l'au moins un élément photosensible pendant le temps d'exposition supplémentaire de telle sorte que des porteurs de charge générés dans l'élément photosensible par la lumière reçue de la scène pendant le temps d'exposition supplémentaire modifient le premier niveau de charge pour une première fraction du temps d'exposition supplémentaire et modifient le deuxième niveau de charge pour une deuxième fraction du temps d'exposition supplémentaire ; et
déterminer si un mouvement s'est produit dans la scène pendant le temps d'exposition supplémentaire sur la base d'une différence entre le premier niveau de charge et le deuxième niveau de charge.

2. Procédé (100) selon la revendication 1, dans lequel il est déterminé qu'aucun mouvement ne s'est produit dans la scène si la différence entre le premier niveau de charge et le deuxième niveau de charge ne diffère pas d'une valeur prédéfinie ou si la différence entre le premier niveau de charge et le deuxième niveau de charge diffère de la valeur prédéfinie par moins d'une valeur seuil.

3. Procédé (100) selon la revendication 1 ou la revendication 2, dans lequel il est déterminé qu'un mouvement s'est produit dans la scène si la différence entre le premier niveau de charge et le deuxième niveau de charge diffère d'une valeur prédéfinie ou si la différence entre le premier niveau de charge et le deuxième niveau de charge diffère de la valeur prédéfinie de plus d'une valeur seuil.

**4.** Procédé (100) selon l'une des revendications 1 à 3, dans lequel une durée de la première fraction du temps d'exposition est égale à une durée de la deuxième fraction du temps d'exposition.

**5.** Procédé (100) selon l'une des revendications 1 à 4, comprenant en outre le fait d'appliquer une correction respective à au moins l'un du premier niveau de charge et du deuxième niveau de charge avant de déterminer la différence entre le premier niveau de charge et le deuxième niveau de charge.

**6.** Procédé (100) selon l'une des revendications 1 à 5, dans lequel un signal de sortie du capteur temps de vol indique la différence entre le premier niveau de charge et le deuxième niveau de charge.

**7.** Procédé (100) selon l'une des revendications 1 à 6, comprenant en outre, pour le temps d'exposition unique de l'élément photosensible, le fait de :
éclairer la scène avec de la lumière de telle sorte que la lumière reçue de la scène comprend des réflexions de la lumière de la scène.

**8.** Procédé (100) selon l'une des revendications 1 à 7, dans lequel, s'il est déterminé qu'un mouvement s'est produit pendant le temps d'exposition, le procédé comprend en outre le fait de :
déterminer une quantité de mouvement dans la scène pendant le temps d'exposition sur la base de la différence entre le premier niveau de charge et le deuxième niveau de charge.

**9.** Procédé (100) selon la revendication 8, dans lequel le fait de déterminer la quantité de mouvement dans la scène pendant le temps d'exposition comprend le fait de :
comparer la différence entre le premier niveau de charge et le deuxième niveau de charge à au moins une valeur seuil de mouvement liée à une quantité respective de mouvement.

**10.** Procédé (100) selon la revendication 8, dans lequel le capteur temps de vol comprend une pluralité d'éléments photosensibles comprenant chacun au moins le premier élément et le deuxième élément, et dans lequel le fait de déterminer la quantité de mouvement dans la scène pendant le temps d'exposition comprend le fait de :

déterminer une différence combinée basée sur les différences entre le premier niveau de charge et le deuxième niveau de charge pour la pluralité d'éléments photosensibles ; et
comparer la différence combinée à au moins une valeur seuil de mouvement liée à une quantité respective de mouvement.

**11.** Procédé (100) selon l'une des revendications 1 à 10, comprenant en outre, pour l'exposition unique de l'élément photosensible, le fait de :
déterminer une image en niveaux de gris pour au moins une partie de la scène sur la base d'une somme du premier niveau de charge et du deuxième niveau de charge.

**12.** Appareil (200) pour détecter un mouvement dans une scène (201), comprenant :

un capteur temps de vol (210), comprenant :

au moins un élément photosensible (221) comprenant au moins un premier élément avec un premier niveau de charge modifiable et un deuxième élément avec un deuxième niveau de charge modifiable ; et circuiterie de commande (240) configurée pour piloter l'au moins un élément photosensible (221) pendant un temps d'exposition unique de l'élément photosensible (221) de telle sorte que des porteurs de charge générés dans l'élément photosensible (221) par la lumière (202) reçue de la scène (201) pendant le temps d'exposition modifient le premier niveau de charge pour une première fraction du temps d'exposition et modifient le deuxième niveau de charge pour une deuxième fraction du temps d'exposition ; et

un circuit de traitement (250) configuré pour déterminer si un mouvement s'est produit dans la scène (201) pendant le temps d'exposition sur la base d'une différence entre le premier niveau de charge et le deuxième niveau de charge, dans lequel le capteur temps de vol est configuré pour ne pas éclairer la scène pendant le temps d'exposition, de telle sorte que la lumière reçue de la scène ne comprend que de la lumière ambiante, et dans lequel, s'il est déterminé qu'un mouvement s'est produit pendant le temps d'exposition :

le capteur temps de vol est, pour un temps d'exposition unique supplémentaire de l'élément photosensible, configuré en outre pour éclairer la scène avec de la lumière ; la circuiterie de commande (240) est en outre configurée pour piloter l'au moins un élément photosensible pendant le temps d'exposition supplémentaire de telle sorte que des porteurs de charge générés dans l'élément photosensible par la lumière reçue de la scène pendant le temps d'exposition supplémentaire modifient le premier niveau de charge pour une première fraction du temps d'exposition supplémentaire et modifient le deuxième niveau de charge pour une deuxième fraction du temps d'exposition supplémentaire; et

le circuit de traitement (250) est en outre configuré pour déterminer si un mouvement s'est produit dans la scène pendant le temps d'exposition supplémentaire sur la base d'une différence entre le premier niveau de charge et le deuxième niveau de charge.

# FIG. 1

102 — driving the at least one photo-sensitive element

100

104 — determining whether motion occured in the scene

# FIG. 2

210

203

201

202

230

220

221

240

250

200

## FIG. 3

241

Illumination Signal | 1 | 0 | 1 | 0 | | 1 | 0 | 1 | 0

Reference Signal

A

B

242

Exposure Time

## FIG. 4

charge level

$C_0$

401

402

$C_1$

$t_0$   $t_1$   $t_2$   time

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015338509 A1

- EP 2978216 A1